# EUROPEAN PATENT APPLICATION

(11) **EP 4 765 261 A1**
(43) Date of publication of application: **24.06.2026**
(21) Application number: 24856744.8
(22) Date of filing: 16.08.2024
(51) Int. Cl.: H01M 10/04, H01M 50/105, H01M 50/184, H01M 50/463

(54) **METHOD FOR MANUFACTURING POUCH-TYPE BATTERY CELL, SEPARATOR SHAPE PROCESSING DEVICE, AND POUCH-TYPE BATTERY CELL MANUFACTURED USING SAME**

(30) Priority: 18.08.2023 KR 20230107982
(71) Applicant: LG Energy Solution, Ltd., Seoul 07335 (KR)
(72) Inventor: JUNG, Woo Jung, Daejeon 34122 (KR)
(74) Representative: Plasseraud IP
(86) International application number: PCT/KR2024/012167
(87) International publication number: WO 2025/042132

(57) **Abstract**

According to one example of the present invention, a pouch-type battery cell can be provided, comprising an electrode assembly in which pluralities of positive electrodes, separators, and negative electrodes are sequentially and repeatedly laminated to be formed in a rectangular shape, and the separators are provided to protrude outward in a state where the positive electrodes and the negative electrodes are covered; and a pouch case in which a folding portion is formed on one side of four sides to accommodate the electrode assembly and a sealing portion is formed on the remaining three sides of the four sides, wherein middle layer separators among the plurality of separators are formed by pressurization inwardly so that the protruding lengths are reduced, and then the sealing portion is formed.

## Description

### Technical Field

The present invention relates to a separator shape processing device, a pouch-type battery cell manufacturing method, and a pouch-type battery cell manufactured using the separator shape processing device, more specifically, to a separator shape processing device, a pouch-type battery cell manufacturing method, and a pouch-type battery cell manufactured using the separator shape processing device, capable of minimizing an electrode breaking phenomenon caused by separator pressurization.

This application claims the benefit of priority based on Korean Patent Application No. 10-2023-0107982 dated August 18, 2023, the disclosure of which is incorporated herein by reference in its entirety.

### Background Art

As a lithium secondary battery, a pouch-type battery cell in which an electrode assembly is sealed by a pouch, which is an aluminum sealing material, is widely used. The electrode assembly of the pouch-type battery cell is accommodated in a pouch case, which is a sealing material. The pouch type battery cell accommodates the electrode assembly in a pouch manufactured with a flexible polymer material having an irregular shape.

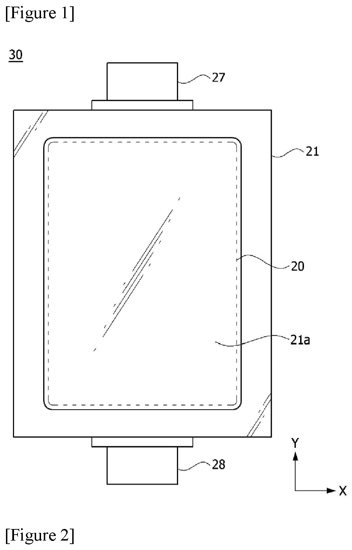

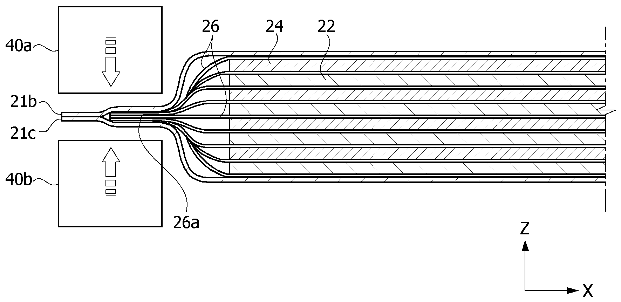

Figure 1 is a plan view showing components of a pouch-type battery cell of a conventional art. Figure 2 is a cross-sectional diagram schematically showing an appearance forming a sealing portion of a pouch-type battery cell (30) in a manufacturing method of a conventional art.

The pouch (21), which is a case of the pouch-type battery cell (30), comprises pouch films having a flexible material. The pouch films are generally made of a laminate sheet composed of an inner covering layer, a metal layer, and an outer covering layer, and a cup-shaped accommodating portion (21a) accommodating the electrode assembly (20) is formed on the pouch.

The electrode assembly (20) of the pouch-type battery cell (30) comprises electrode leads (27, 28). Here, the electrode assembly (20) has a structure in which a positive electrode (22), a negative electrode (24), and a separator (26) interposed between the positive electrode (22) and the negative electrode (24) are laminated. In this instance, the separator (26) is cut to a size sufficient to cover the upper and lower surfaces, i.e., the wide surfaces, of the positive electrode (22) or the negative electrode (24), and the end portion (26a) of the separator (26) protrudes outside the positive electrode (22) and the negative electrode (24).

Referring to Figure 2 together with Figure 1, in a process for manufacturing a pouch-type battery cell (30) of a conventional art, the electrode assembly (20) is accommodated in the accommodating portion (21a) of the pouch (21), and then high-temperature pressurization is applied to an outer peripheral portion of the pouch films using sealing blocks (40a, 40b), whereby a sealing region is formed while the inner covering layer is melted and thus the pouch films (21b, 21c) are thermally fused to each other.

However, in the process that the sealing blocks (40a, 40b) pressurize the outer peripheral portion of the pouch (21), the end portion (26a) of the separators (26) may interpose or interfere between the pouch films (21b, 21c). In this case, a binder component of the separator (26) is also melted together, whereby a phenomenon that the inner covering layer of the pouch films (21b, 21c) and the separator (26) are fused has occurred. Such a phenomenon is called a separator chewing phenomenon. Recently, there is an increasing trend to reduce the volume of pouch-type battery cells for the same capacity by making the sealing region of the pouch closer to the electrode assembly (20). Therefore, by forming the sealing region closer to the electrode assembly (20), the possibility, in which the separator is interposed in the sealing region, may increase.

In a secondary battery that such a separator chewing phenomenon occurs, if the electrode assembly flows due to external impact, and the like, this fluid force is transmitted to the inner covering layer bonded to the electrode assembly, whereby it is possible to cause damage, such as cracks, in the inner covering layer. This may result in poor insulation of the battery case.

To prevent this separator chewing phenomenon, attempts to thermoform the end portion of the separator during the manufacturing step of the electrode assembly are made.

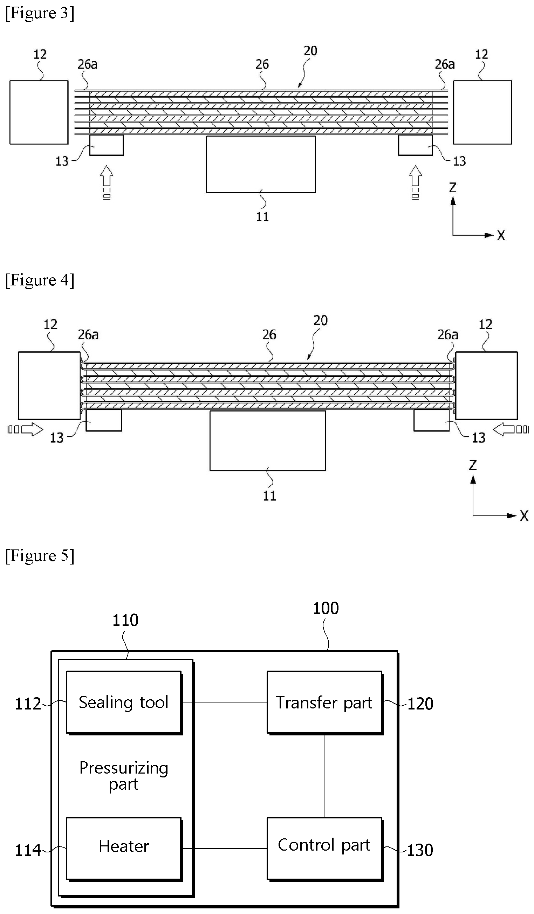

Figures 3 and 4 are cross-sectional diagrams schematically showing appearances shape-processing a separator (26) of an electrode assembly (20) of a pouch-type battery cell (30) in a manufacturing method of a conventional art.

Referring to Figures 3 and 4, in the conventional art, the electrode assembly (20) is transferred to a sealing position by a conveyor (11), and then a pair of lower supports (13) located below both side terminals of the electrode assembly (20) in the longitudinal direction is raised in the Z-axis direction to support both side terminals of the electrode assembly (20), and in this state, forming blocks (12) having a preset temperature are advanced toward the electrode assembly (20) in the arrow direction to pressurize the end portions (26a) of the separators (26) of the electrode assembly (20), thereby thermoforming them so that the protruding lengths of the separators (26) are shortened.

However, when the end portions (26a) of the separators (26) are formed by pressurization, the forming blocks (12) may collide with the electrodes (22, 24) upon pressurization of the forming blocks (12), and there is a problem that the components of the electrode (e.g., electrode active material, binder, etc.) are broken by the pressurizing force. When the loading amount of the electrode active material is reduced due to the electrode breaking phenomenon, the surface area of the electrode is reduced, and thus the resistance of the ion movement between the electrode and the electrolyte increases, so that there could be problems, such as deterioration of electrochemical characteristics and battery capacity reduction of the manufactured battery cell.

Therefore, it is necessary to develop a technology for solving the problems occurring in the manufacturing process of the pouch-type battery cell of the conventional art.

### Disclosure

### Technical Problem

The present invention is intended to solve the problem that the electrode breaking phenomenon increases due to pressurization of separators.

Through one example of the present invention, by comprising a pressurizing part pressurizing a middle layer excluding a top layer and a bottom layer in a laminating direction of an electrode assembly in a heated state to process a shape of separators, it is intended to provide a separator shape processing device, a separator shape processing method, and a pouch-type secondary battery manufactured using the same, capable of minimizing the number of separators to be pressurized to minimize an electrode breaking phenomenon caused by stress transmitted from the pressurized separators.

Through one example of the present invention, it is intended to provide a pouch-type secondary battery which can bring a sealing region of a pouch closer to an electrode assembly and protect an outer terminal of an electrode by separators.

### Technical Solution

In order to achieve the above-described objects, according to one example of the present invention, a pouch-type battery cell can be provided, comprising an electrode assembly in which pluralities of positive electrodes, separators, and negative electrodes are sequentially and repeatedly laminated to be formed in a rectangular shape, and the separators are provided to protrude outward in a state where the positive electrodes and the negative electrodes are covered; and a pouch case in which a folding portion is formed on one side of four sides to accommodate the electrode assembly and a sealing portion is formed on the remaining three sides of the four sides, wherein middle layer separators among the plurality of separators are formed by pressurization inwardly so that the protruding lengths are reduced, and then the sealing portion is formed.

The electrode assembly is formed in a rectangular shape, which may be formed by sequentially and repeatedly laminating a positive electrode, a separator, a negative electrode, and a separator in a rectangular thin plate shape. That is, the electrode assembly may have rectangular upper and lower surfaces, and four side surfaces.

The size of separator may be provided larger than that of the positive electrode and the negative electrode, and the separator may be provided by further protruding outward from the four sides in a state where the positive electrode and the negative electrode are covered. Then, after the pressurization forming of the separators, the protruding lengths of the top layer and bottom layer separators become longer than the protruding length of the middle layer separator. As one example, before pressurization forming, the protruding lengths of all separators may be the same, but the pressurization forming may be performed so that the protruding length of the middle layer separator is shortened.

The electrode assembly is provided with a positive electrode lead and a negative electrode lead, where the positive electrode lead and the negative electrode lead may be provided on one side, or the positive electrode lead may be provided on one side and the negative electrode lead may be provided on the other side facing the one side. In the rectangular electrode assembly, the electrode leads may be provided on two short sides and the electrode leads may not be provided on two long sides.

The sealing portion may comprise a top sealing portion formed in a state where electrode leads penetrate, and a side sealing portion formed in a state where the electrode leads are not interposed. A folding portion by folding of the pouch may be formed on any one of two long sides. Therefore, the side sealing portion may be formed on the other long side.

The pressurization forming of the separators may be performed on a side surface of the electrode assembly corresponding to the side sealing portion. That is, the pressurization forming of the separators may be performed on the side surface of the electrode assembly corresponding to the long side.

The pressurization forming of the separators may be performed on a side surface of the electrode assembly corresponding to the top sealing portion. That is, the pressurization forming of the separators may be performed on the side surface of the electrode assembly corresponding to the short side.

The pressurization forming of the separators may be performed in a diagonal direction from vertices of the electrode assembly. That is, the pressurization forming of the separators may be performed on side edges of the electrode assembly where vertices met with the long sides and the short sides are formed. Since the protruding length of the separator is reduced at the edge where the vertex is formed, it may be like chamfering. However, the formation processing like this chamfering may be performed except for the top layer and bottom layer separators. At this time, the pressurization forming direction may be a diagonal direction from the vertex, and may be a direction with an angle of approximately 45 degrees.

The pressurization forming of the separators may be performed at two vertices adjacent to the folding portion among four vertices of the electrode assembly.

It may comprise a partial sealing portion formed in the folding portion, wherein the partial sealing portion may be formed by extending from the top sealing portion toward a vertex direction of the electrode assembly.

The partial sealing portion may be formed by extending from the top sealing portion toward a vertex direction of the electrode assembly.

If sealing strength enhancement is possible through the partial sealing portion, it is possible to protect the vertex portion of the electrode assembly through the partial sealing portion.

It is preferable that the separators located in the top layer and the bottom layer among the plurality of separators are folded toward the middle layer of the electrode assembly upon formation of the sealing portion. Therefore, the side surfaces of the electrode assembly may be protected through the bent separators. In addition, since the protruding lengths of the separators in the middle layer are relatively short, a space where the separators located in the top layer and the bottom layer may be folded may be formed. Through such a space, the separators in the top layer and the middle layer may be folded substantially vertically. Then, the folded separators may be made to entirely cover the side surfaces of the electrode assembly.

To achieve the above-described objects, according to one example of the present invention, it is possible to provide a separator shape processing device capable of shape-processing a separator of an electrode assembly.

According to one example of the present invention, a device for shape-processing a plurality of laminated separators, wherein the separator shape processing device comprises: a pressurizing part pressurizing a middle layer excluding a top layer and a bottom layer of the electrode assembly in the laminating direction to process the shape of the separators so that the protruding lengths of the separators are reduced; and a transfer part configured to move the pressurizing part toward the separators and returns the moved pressurizing part to its original position after the shape processing of the separators is completed, may be provided.

The pressurizing part may be provided to pressurize the middle layer in a direction perpendicular to the laminating direction.

The electrode assembly may be formed in a rectangular shape, and the pressurizing part may perform pressurization forming on a side surface of the electrode assembly so that the protruding lengths of the separators are reduced. The pressurization forming may be performed in a direction perpendicular to the laminating direction.

The pressurizing part may perform pressurization forming in a direction vertical to a long side or a short side of the rectangular shape.

The pressurizing part may perform pressurization forming in a diagonal direction from a vertex of the rectangular shape.

The pressurizing part may comprise a sealing tool having a protrusion portion protruding toward the separators of the middle layer and an extension portion extending from the protrusion portion in the laminating direction of the electrode assembly, and a heater built into the sealing tool.

To achieve the above-described objects, according to one example of the present invention, it is possible to provide a method for manufacturing a pouch-type battery cell including an electrode assembly in which pluralities of positive electrodes, separators, and negative electrodes are sequentially and repeatedly laminated to be formed in a rectangular shape, and the separators are provided to protrude outward in a state where the positive electrodes and the negative electrodes are covered.

Particularly, it is possible to provide a method for manufacturing a pouch-type battery cell using an electrode assembly in which formation processing, wherein protruding lengths in separators of the electrode assembly are partially reduced, is performed.

First, a encapsulation step may be performed after a separator forming step of the electrode assembly. The encapsulation step is a step of sealing the electrode assembly by inserting it into a pouch case, which may be performed through formation of a sealing portion.

The separator forming step of the electrode assembly may comprise a processing step of thermally pressurizing middle layer separators excluding top layer separators and bottom layer separators in a direction perpendicular to the laminating direction of the electrode assembly through the pressurizing part to reduce the protruding lengths of the separators.

Through the processing step, the protruding lengths of the separators located in the middle layer become relatively shorter than the protruding lengths of the separators located in the top layer and the bottom layer. Upon formation of the sealing portion, the separators located in the top layer and the bottom layer are folded toward the up-and-down center.

Therefore, the sealing portion may be formed to be closer to the electrode assembly. Particularly, the partial sealing portion may be formed to be closer to the vertex of the electrode assembly.

### Advantageous Effects

Through one example of the present invention, by comprising a pressurizing part pressurizing a middle layer excluding a top layer and a bottom layer in a laminating direction of an electrode assembly to process a shape of separators so that protruding lengths of the separators are reduced, it is possible to provide a separator shape processing device capable of minimizing the number of separators to be pressurized to minimize an electrode breaking phenomenon caused by stress transmitted from the pressurized separators.

Through one example of the present invention, defects due to electrode breakage can be minimized, whereby it is possible to provide a pouch-type battery cell with excellent battery capacity and enhanced reliability.

Through one example of the present invention, it is possible to provide a separator shape processing device, a separator shape processing method, and a pouch-type battery cell manufactured using the same, capable of effectively preventing separators from being interposed between pouches to be sealed.

Through one example of the present invention, it is possible to provide a pouch-type battery cell manufacturing method, and a pouch-type battery cell manufactured using the same, capable of protecting vertices of an electrode assembly and enhancing sealing strength through a partial sealing portion.

### Description of Drawings

Figure 1 is a plan view showing components of a pouch-type battery cell of a conventional art.
Figure 2 is a cross-sectional diagram schematically showing an appearance of forming a sealing part of a pouch-type battery cell in a manufacturing method of a conventional art.
Figures 3 and 4 are cross-sectional diagrams schematically showing appearances of shape-processing separators of an electrode assembly of a pouch-type battery cell in a manufacturing method of a conventional art.
Figure 5 is a conceptual diagram showing components of a separator shape processing device according to one example of the present invention.
Figures 6 to 8 are schematic diagrams showing components of a separator shape processing device according to one example of the present invention.
Figure 9 is a cross-sectional diagram schematically showing an appearance of forming a sealing part of a pouch-type battery cell manufactured using a separator shape processing device according to one example of the present invention.
Figure 10 is a plan view schematically showing an appearance of shape-processing separators using a separator shape processing device according to one example of the present invention.
Figure 11 is a plan view schematically showing an appearance of a pouch-type battery cell comprising another type of pouch case of the present invention.
Figure 12 is a plan view schematically showing an appearance of shape-processing separators using a separator shape processing device according to another example of the present invention.
Figure 13 is a flow chart showing steps for manufacturing a pouch-type battery cell using a separator shape processing device according to one example of the present invention.

### Best Mode

Hereinafter, a separator shape processing device according to one example of the present invention will be described in detail with reference to the attached drawings.

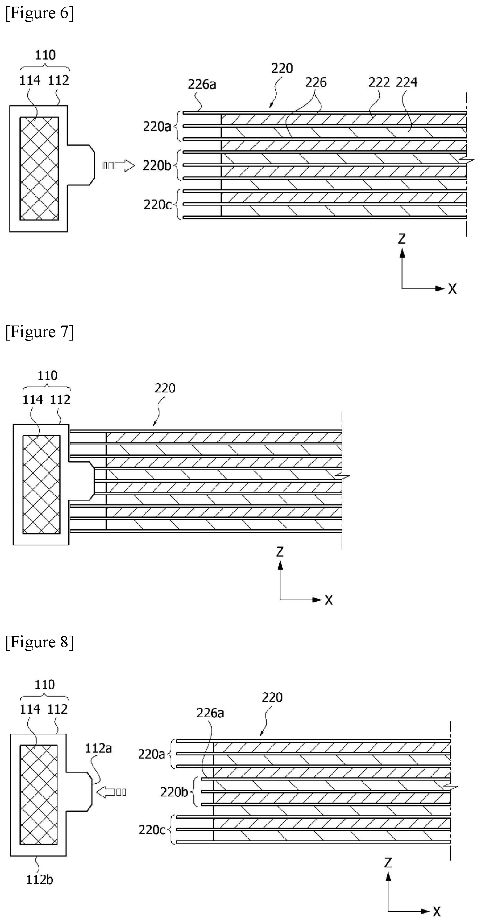

Figure 5 is a block diagram showing components of a separator shape processing device (100) according to one example of the present invention. Figures 6 to 8 are schematic diagrams showing components of a separator shape processing device (100) according to one example of the present invention.

Referring to Figures 5 to 8, the separator shape processing device (100) according to one example of the present invention is a device for shape-processing a plurality of laminated separators (226) of an electrode assembly (220). The separator (226) may comprise a polymer material. For example, the separator (226) may have a property of heat-shrinking at high temperatures. The separator (226) may be manufactured by comprising a polyolefin-based polymer. For example, the polyolefin-based polymer may be polyethylene, polypropylene, and the like.

The electrode assembly (220) may have a structure in which a positive electrode (222), a separator (226), and the negative electrode (224) are sequentially and repeatedly laminated in the vertical direction (Z-axis direction). For example, the positive electrode, the negative electrode, and the separator may be formed in the form of a thin foil with a rectangular shape and laminated, and the separator may be provided by extending further outward from the four sides of the positive electrode and the negative electrode.

The separator shape processing device (100) according to one example of the present invention comprises a pressurizing part (110). Specifically, the pressurizing part (110) may pressurize the separators (226) in a heated state to process the shape of the separators (226) so that the protruding lengths of the separators (226) are reduced. The pressurizing part (110) may pressurize a middle layer (220b) except for a top layer (220a) and a bottom layer (220c) in the laminating direction of the electrode assembly (220). Accordingly, the separators (226) of the middle layer (220b) facing the sealing portion of the pouch among a plurality of separators (226) laminated in the vertical direction may have an indented shape compared to the remaining separators (226) in the top layer (220a) and the bottom layer (220c).

The separator shape processing device (100) according to one example of the present invention comprises a transfer part (120). Specifically, the transfer part (120) may be provided to move the pressurizing part (110) forward toward the separators (226). The transfer part (120) may be provided to return the moved pressurizing part (110) to its original position after the shape processing of the separators (226) is completed. For example, the transfer part (120) may be provided with a hydraulic cylinder, in which the end of the cylinder is connected to the component of the pressurizing part (110), a servo motor, and the like.

Therefore, the separator shape processing device (100) according to one example of the present invention comprises a pressurizing part (110) pressurizing only the separators (226) located in the middle layer (220b) among the top layer (220a), the middle layer (220b), and the bottom layer (220c) in the laminating direction of the electrode assembly (220) in a heated state to process a shape of the separators (226), thereby minimizing the number of pressurized separators (226), whereby it is possible to minimize an electrode breaking phenomenon caused by stress transmitted from the pressurized separators (226). Accordingly, the separator shape processing device (100) of the present invention can minimize loss of an electrode active material due to electrode breakage, thereby effectively reducing a defect rate of battery cells, and manufacturing battery cells with excellent battery capacity.

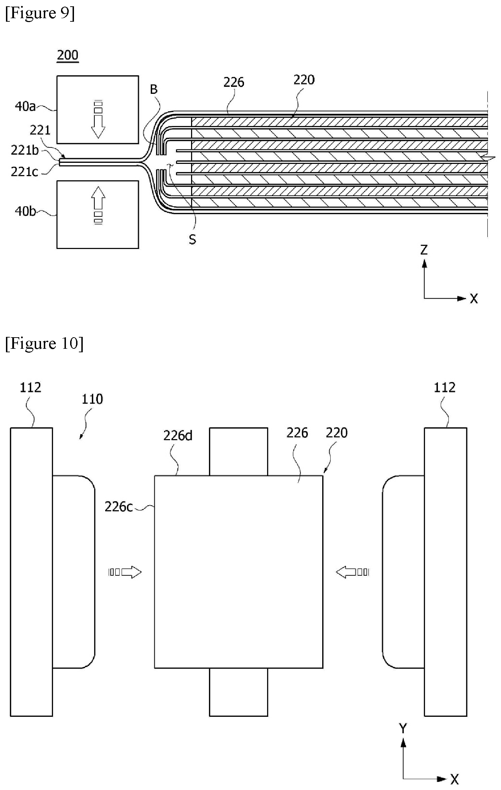

Figure 9 is a cross-sectional diagram schematically showing an appearance of forming a sealing part (211) of a pouch-type battery cell (200) from an electrode assembly (220) manufactured using a separator shape processing device (100) according to one example of the present invention.

In a pouch-type battery cell (200) in which the separators (226) are shape-processed using a separator shape processing device (100) according to one example of the present invention, when a sealing portion (211) is formed by pressurizing an outer peripheral portion of a pouch (220) at high temperatures in the arrow direction using sealing blocks (40a, 40b), the end portions of the separators (226) are not interposed between the pouch films (221b, 221c) or interfered therewith. When forming the sealing portion (211), the protruding separators (226) is bent, and the bending lengths of the uppermost and lowermost separators become longer. Then, the folding length of the separator (226) becomes shorter as it goes toward the center. Theoretically, the separator (226) located closest to the center may not be folded. For this reason, when forming the sealing portion (211), the protruding lengths of the separators (226) located in the central portion may be maintained relatively long.

According to the present example, the protruding length may become short through shape-processing of the separators (226) located in the central portion in advance before forming the sealing portion (211). Then, the uppermost layer and lowermost layer separators are not shape-processed, but may be folded and extended to the central portion when forming the sealing portion (211). Here, it is preferable that the protruding lengths of the uppermost layer and lowermost layer separators are less than or equal to half the thickness of the electrode assembly.

Therefore, by using the separator shape processing device (100) according to one example of the present invention, it is possible to prevent the separator chewing phenomenon, such as interposition between or interference with the pouch films (221b, 221c), during the sealing process of the pouch (220).

In addition, the pouch-type battery cell (200) in which the separators (226) are shape-processed using the separator shape processing device (100) may have a space (S) separated between the separators (226) located in the middle layer (220b) in the laminating direction of the electrode assembly (220), and the sealing portion (211).

Figure 10 is a plan view schematically showing an appearance of shape-processing separators using a separator shape processing device according to one example of the present invention.

Referring to Figures 8 and 10, the separator (226) of the pouch-type battery cell (200) may be in a planar polygon. For example, as shown in Figure 10, the separator (226) may be in a planar rectangle. The separator (226) may have long sides (226c) and short sides (226d). The separator (226) may have, for example, a larger area than that of the upper or lower surface of the positive electrode (222) or negative electrode (224) to be capable of sufficiently covering the positive electrode (222) or negative electrode (224).

The pressurizing part (110) of the separator shape processing device (100) according to one example of the present invention may pressurize the protruding portion of the polygonal separator (226), thereby so that the protruding length thereof is reduced. The pressurizing part (110) may pressurize the edge portions (226a) of the separators (226) located in the middle layer (220b) in the laminating direction of the electrode assembly (220), thereby shape-processing it so that the protruding length of the edge portion (226a) is reduced. At this time, the pressurizing part (110) may be provided to pressurize only the edge portion (226a) of the separator (226) protruded more than the electrode, without pressurizing the electrode.

The pressurizing part (110) of the separator shape processing device (100) according to one example of the present invention may comprise a sealing tool (112) and a heater (114). The sealing tool (112) may comprise a protrusion portion (112a) protruding toward the separators (226) of the middle layer (220b). The protrusion portion (112a) may be formed to a size capable of covering the separators (226) located in the middle layer (220b) of the electrode assembly (220).

In addition, the sealing tool (112) may have an extension portion (112b) extending from the protrusion portion (112a). For example, the extension portion (112b) may have a shape extending in the laminating direction of the electrode assembly (220). However, the shape of the extension portion (112b) is not necessarily limited to such a shape, and the extension portion (112b) may have a shape extending in the up-and-down, and left-and-right directions based on the protrusion portion (112a). Such an extension portion (112b) may perform a role of heating the separator (226) together with the protrusion portion (112a).

The extension portion (112b) may be formed to have a height equal to or greater than the height of the electrode assembly (220), and the protrusion portion (112a) may be formed in the central portion of the extension portion (112b). It is preferable that the height of the protrusion portion (112a) is smaller than the height of the electrode assembly (220).

When the sealing tool (112) pressurizes the electrode assembly (220) while approaching it, the protrusion portion (112b) may move to the center of the electrode assembly (220), and thus, may pressurize only the middle layer separators, except for the top layer and bottom layer separators.

Here, the length of the protrusion portion (112a) may be the same as the length of the separator to be pressurized, and the length of the protrusion portion (112a) may be the same as the length that the protruding length of the separator is reduced. The sealing tool (112) performs pressurization movement until the surface facing the separator in the extension portion (112b) contacts the separator, whereby it is possible to control a pressurization movement distance of the protrusion portion (112a). That is, the protrusion portion (112a) may be controlled so as not to pressurize the electrode.

In order that the sealing tool (112) pressurizes the separators (226) located in the middle layer (220b), the transfer part (120) may be provided to move the sealing tool (112) in a direction perpendicular to the laminating direction of the plurality of separators (226).

The pressurizing part (110) may comprise a heater (114). The heater (114) may have a shape built into the sealing tool (112). The heater (114) may be provided to heat the sealing tool (112) to a temperature at which the heat conducted from the sealing tool (112) may deform the shape of the separator (226). The heater (114) may comprise, for example, a heating wire generating heat by electrical resistance. For example, as the heater (114), a resistance heater (114) may be used.

The separator shape processing device (100) of the present invention may further comprise a control part (130). The control part (130) may be provided to control an operation of the transfer part (120). The control part (130) may be provided to adjust a temperature of the heater (114) of the pressurizing part (110). The control part (130) may comprise a temperature controller (not shown) provided to set the temperature of the heater (114) of the pressurizing part (110). The temperature controller may operate in such a way that the heater (114) is turned off when the temperature of the heater (114) is higher than the set temperature, and the heater (114) is turned on when the temperature is lower than the set temperature.

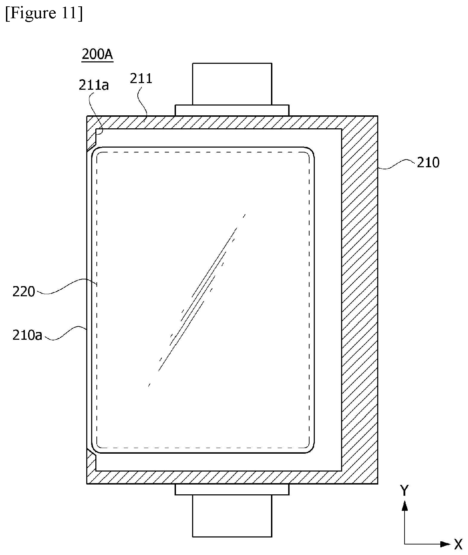

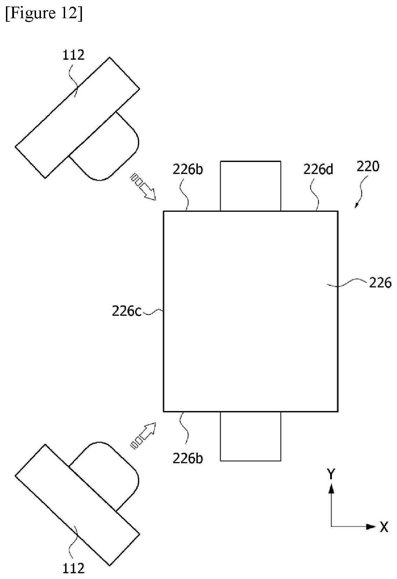

Figure 11 is a plan view schematically showing an appearance of a pouch-type battery cell (200A) comprising another type of pouch-type case (210) of the present invention. Figure 12 is a plan view schematically showing an appearance of shape-processing separators (226) using a separator shape processing device (100) according to another example of the present invention. For reference, the pouch-type battery cell (200A) of Figure 11 may be similar or identical to the remaining electrode assembly and electrolyte composition, except that structural features of the pouch-type case (210) are deferent therefrom.

Referring to Figures 11 and 12, the pouch-type battery cell (200A) comprising a pouch-type case (210) in a different form may have a form in which the left side (210a) is folded. Accordingly, the pouch-type battery cell (200A) may be sealed at the upper and lower sides in the Y-axis direction and the right edge in the X-axis direction. However, to perform the sealing more completely, a partial sealing portion (211a) may be formed at each of the upper and lower ends in the Y-axis direction of the left side (210a) of the pouch-type case (210). In other words, a partial sealing portion (211a) extending vertically from the upper and lower sides of the left side (210a) of the folding portion may be formed. In other words, the sealing portion (211) formed at the upper and lower ends in the Y-axis direction is formed in a horizontal direction, and the partial sealing portion (211a) has a partial sealing portion (211a) extending vertically toward the edge portion of the electrode assembly (220) from the upper and lower sides of the left side (210a) formed as the folding portion.

Accordingly, since the partial sealing portion (211a) is formed at a position very close to the electrode assembly (220) accommodated in the accommodating portion of the pouch-type case (210), at the portion (226b) (e.g., the vertex portion) where the rectangular long side (226c) and short side (226d) of the separator (226) meet, there is a high possibility that the separator chewing phenomenon occurs in the partial sealing portion (211a).

Therefore, in the separator shape processing device (100) according to one example of the present invention, when the separator (226) is in a planar rectangle, the pressurizing part (110) may be positioned to face in a diagonal direction at a portion (226b) where the rectangular long side (226c) and short side (226d) of the separator (226) meet, that is, the edge portion.

In addition, the transfer part (120) may be provided to move the sealing tool (112) of the pressurizing part (110) in a diagonal direction toward the portion (226b) where the long side (226c) and the short side (226d) meet. As one example, the sealing tool (112) may be moved at an angle of 45 degrees.

Accordingly, the sealing tool (112) in a heated state can reduce the protruding length of the portion (226b) where the long side (226c) and the short side (226d) of the rectangular shape of the separator (226) meet.

In addition, the transfer part (120) can be provided to move the sealing tool (112) diagonally so that the sealing tool (112) presses the separator (226) located on the middle layer (220b).

Therefore, the separator shape processing device (100) according to one example of the present invention can prevent the separator (226) from being interposed between the sealing portions (211) or interfered therewith in advance even though it forms the partial sealing portion (211a) on each of the front and rear ends in the Y-axis direction of the left side (226c) of the pouch-type case (210).

Meanwhile, the partial sealing portion (211a) may also be formed in the long-side sealing portion (211). In this case, the shape-processing of the separators may be performed in a diagonal direction at all four edge portions. Of course, the shape-processing of the separators may be performed only for the middle layer separators, rather than the top layer and bottom layer separators.

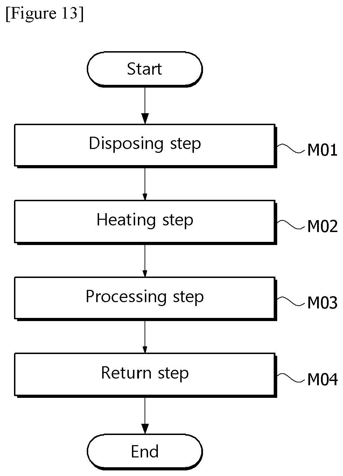

Figure 13 is a flow chart showing steps for manufacturing a pouch-type battery cell (200) using a separator shape processing device (100) according to one example of the present invention. Specifically, Figure 13 shows detailed steps of the forming step for forming the separator of the electrode assembly.

According to one example of the present invention, it provides a method for manufacturing a battery cell by processing a shape of a plurality of laminated separators (226) of an electrode assembly (220) using a separator shape processing device (100) comprising a pressurizing part (110) and a transfer part (120).

To manufacture a pouch-type battery cell, processes of manufacturing an electrode assembly and manufacturing a pouch accommodating the electrode assembly are first performed.

In the present example, a forming step of forming a separator may be performed in the manufacturing process of the electrode assembly.

The manufacturing method according to one example of the present invention, as one example, the separator forming step of the electrode assembly comprises a disposing step (M01). In the disposing step (M01), the electrode assembly (220) may be disposed at a set position. At this time, the electrode assembly (220) may be disposed at a position where the pressurizing part (110) faces the separators (226) located in the middle layer (220b) of the laminating direction of the electrode assembly (220).

Also, the manufacturing method according to one example of the present invention may comprise a heating step (M02). Specifically, in the heating step (M02), the pressurizing part (110) is heated. At this time, the pressurizing part (110) may be raised to a temperature at which the protruding length of the separator (226) may be reduced and deformed by pressurizing the separators (226). The temperature may be set in consideration of the glass transition temperature of the plastic separator (226).

In addition, the manufacturing method according to one example of the present invention may comprise a processing step (M03). In the processing step (M03), the separator (226) may be shape-processed. At this time, the shape processing may be performed as the heated pressurizing part (110) pressurizes only the separator (226) located in the middle layer (220b) among the top layer (220a), the middle layer (220b), and the bottom layer (220c) in the laminating direction of the electrode assembly (220) by the transfer part (120). Here, the processing step (M03) may be performed only on the long sides of the electrode assembly (220), only on the short sides, or on both the long sides and the short sides. As one example, the shape processing may be performed on the short sides after the shape processing is performed on the long sides.

Furthermore, the manufacturing method according to one example of the present invention may comprise a return step (M04). In the return step (M04), the pressurizing part (110) may be returned to the original position by the transfer part (120). That is, the transfer part (120) may move the pressurizing part (110) forward toward the separators (226), or conversely, move the pressurizing part (110) backward, thereby returning it to the original position.

Also, the separator (226) may be a planar polygon. In the manufacturing method of the present invention, the edge portion (226a) of the separator (226) located in the middle layer (220b) may be formed by pressurization in the processing step (M03) so that the protruding length is reduced.

In addition, the pressurizing part (110) may comprise a sealing tool (112) having a protrusion portion (112a) protruding toward the separators (226) of the middle layer (220b) and an extension portion (112b) extending from the protrusion portion (112a) in the laminating direction of the electrode assembly (220), and a heater (114) built into the sealing tool (112). That is, in the manufacturing method of the present invention, the protrusion portion (112a) of the sealing tool (112) may pressurize the separators (226) located in the middle layer (220b) of the electrode assembly (220) in the pressurizing step. At this time, while the protrusion portion (112a) pressurizes the separators (226), the extension portion (112b) may be in a heated state so that the temperature of the separators (226) may be quickly and stably raised.

Furthermore, when the separator (226) is in a planar rectangle, in the processing step (M03), the transfer part (120) may be provided to move the sealing tool (112) in a diagonal direction toward at least a portion (226b) of the separator (226) where the long side (226c) and the short side (226d) of the rectangle meet.

When the performance of such a separator forming step is completed, the encapsulation step in which the electrode assembly is inserted into the pouch case may be performed. Of course, when the separator forming step is completed, a taping step of surrounding the long sides and long sides of the electrode assembly may be performed. The taping may be performed at three locations along the longitudinal direction of the electrode assembly.

During the taping process, the separators protruding from the long sides may be folded. Particularly, the folding of the separators located at the top and bottom may be further increased. At this time, since the separators located at the middle are in a pre-formed state so that their protruding length is shorten, the taping may be performed more stably.

The electrode assembly in which the taping is completed may be hereinafter inserted into the pouch case.

According to one example of the present invention, it is possible to provide a pouch-type battery cell (200) manufactured using the separator shape processing device (100). The pouch-type battery cell (200) according to one example of the present invention is manufactured using the separator shape processing device (100) comprising the pressurizing part (110) and the transfer part (120) according to another example of the present invention. The pouch-type battery cell (200) comprises an electrode assembly (220). Here, the electrode assembly (220) comprises a plurality of positive electrodes (222), a plurality of negative electrodes (224), and a plurality of separators (226) interposed between the positive electrodes (222) and the negative electrodes (224), which are sequentially and repeatedly laminated.

The pouch-type battery cell (200) comprises a pouch-type case (210). The electrode assembly (220) is accommodated in an accommodating portion of the pouch-type case (210). An electrolyte is filled in the accommodating portion of the pouch-type case (210). The pouch-type battery cell (200) comprises a sealing portion (211) formed by sealing an outer peripheral surface of the pouch-type case (210). The sealing portion may be formed parallel to the long sides and short sides of the pouch-type case, and may be formed longer than the lengths of the long sides and short sides. The sealing portion (211) may be formed over the entire width and length of the pouch-type case (210). Of course, the sealing portion (211) may not be formed on any one of the long sides due to folding of the pouch.

Upon forming the sealing portion (211), to prevent the chewing phenomenon of the separator, the shape processing for reducing the protruding length of the middle layer separators may be performed. Therefore, the sealing portion (211) may be formed closer to the electrode assembly (222). The sealing portion (211) forms a bezel portion of the pouch-type battery cell (200). If the thickness of the bezel portion and the size of the electrode assembly (220) are fixed, the closer the bezel portion is to the electrode assembly (220), the smaller the size of the pouch-type battery cell may be. That is, the volume of the pouch-type battery cell may be reduced for the same capacity.

As in Figure 12, when the separator (226) is in a planar rectangle, the portion (226b) where the rectangular long side (226c) and short side (226d) of the separator (226) in the middle layer (220b) of the electrode assembly (220) meet may have an indented shape compared to the separators (226) in the top layer (220a) and the bottom layer (220c) of the electrode assembly (220).

Therefore, the separators (226) facing the sealing portion (211) among the plurality of separators (226) are provided to have an indented shape compared to the remaining separators (226), whereby the pouch-type battery cell (200) of the present invention has no separator chewing phenomenon, and minimizes the electrode breaking phenomenon caused by stress transmitted from the pressurized separator (226), thereby being a battery cell with excellent battery capacity.

Also, in the pouch-type case (210), the separation space (S) may be formed between the separators (226) located in the middle layer (220b) in the direction where the positive electrode (222), the negative electrode (224), and the separator (226) of the electrode assembly (220) are laminated, and the sealing portion (211).

Among the plurality of separators (226), the separators (226) located in the top layer (220a, upper layer) and the bottom layer (220c, lower layer) of the laminating direction (Z-axis direction) of the electrode assembly (220) may have a shape (B) folded toward the middle of the electrode assembly (220).

Therefore, the separators (226) with the folded shape (B) formed on the top layer (220a) and the bottom layer (220c) of the electrode assembly (220) in the pouch-type battery cell (200) of the present invention may cover one side of the electrode assembly (220), so that it is possible to effectively prevent electrical connection between the electrode assembly (220) accommodated in the accommodating portion of the pouch-type case (210) and the metal layer inside the pouch-type case (210) from occurring.

In the above-described examples, an electrode assembly in which a separator, a positive electrode, a separator, and a negative electrode are sequentially and repeatedly laminated is taken as one example. For the convenience of manufacturing the electrode assembly, a semi-finished electrode assembly may be manufactured in advance, and then the semi-finished products may be laminated to manufacture the electrode assembly. In the semi-finished product, the protruding portions of the separators may be manufactured to be in close contact with each other vertically. As one example, such semi-finished products may be referred to as mono-cells and half-cells. After multiple monocells are laminated, half-cells may be finally laminated to manufacture an electrode assembly. The protruding portions of the separators in the monocells and the half-cells may be in close contact with each other vertically.

Even in the case of such an electrode assembly, the separators in the top layer, middle layer, and bottom layer are still provided similarly. Therefore, the same effect may also be expected in the formation of two or more closely attached separators as in the formation of single sheets of separators.

### Industrial Applicability

It is described in the Detailed Description of Invention.

## Claims

1. A pouch-type battery cell, comprising:
an electrode assembly in which pluralities of positive electrodes, separators, and negative electrodes are sequentially and repeatedly laminated to be formed in a rectangular shape, and the separators are provided to protrude outward in a state where the positive electrodes and the negative electrodes are covered; and
a pouch case in which a folding portion is formed on one side of four sides to accommodate the electrode assembly and a sealing portion is formed on the remaining three sides of the four sides, wherein
middle layer separators among the plurality of separators are formed by pressurization inwardly so that the protruding lengths are reduced, and then the sealing portion is formed.

2. The pouch-type battery cell according to claim 1, wherein
the sealing portion comprises a top sealing portion formed in a state where electrode leads penetrate, and a side sealing portion formed in a state where the electrode leads are not interposed.

3. The pouch-type battery cell according to claim 2, wherein
the pressurization forming of the separators is performed on a side surface of the electrode assembly corresponding to the side sealing portion.

4. The pouch-type battery cell according to claim 2, wherein
the pressurization forming of the separators is performed on a side surface of the electrode assembly corresponding to the top sealing portion.

5. The pouch-type battery cell according to claim 2, wherein
the pressurization forming of the separators is performed in a diagonal direction from vertices of the electrode assembly.

6. The pouch-type battery cell according to claim 5, wherein
the pressurization forming of the separators is performed at two vertices adjacent to the folding portion among four vertices of the electrode assembly.

7. The pouch-type battery cell according to claim 6, comprising
a partial sealing portion formed in the folding portion, wherein the partial sealing portion is formed by extending from the top sealing portion toward a vertex direction of the electrode assembly.

8. The pouch-type battery cell according to claim 7, wherein
the partial sealing portion is formed by extending from the top sealing portion toward a vertex direction of the electrode assembly.

9. The pouch-type battery cell according to claim 1, wherein
the separators located in the top layer and the bottom layer among the plurality of separators are folded toward the middle layer of the electrode assembly upon formation of the sealing portion.

10. A separator shape processing device for shape-processing a plurality of laminated separators in an electrode assembly, the separator shape processing device comprises:
a pressurizing part pressurizing a middle layer excluding a top layer and a bottom layer of the electrode assembly in the laminating direction to process the shape of the separators so that the protruding lengths of the separators are reduced; and
a transfer part configured to move the pressurizing part toward the separators and returns the moved pressurizing part to its original position after the shape processing of the separators is completed.

11. The separator shape processing device according to claim 10, wherein
the pressurizing part is provided to pressurize the middle layer in a direction perpendicular to the laminating direction.

12. The separator shape processing device according to claim 11, wherein
the electrode assembly is formed in a rectangular shape, and
the pressurizing part performs pressurization forming on a side surface of the electrode assembly so that the protruding lengths of the separators are reduced.

13. The separator shape processing device according to claim 12, wherein
the pressurizing part performs pressurization forming in a direction vertical to a long side or a short side of the rectangular shape.

14. The separator shape processing device according to claim 13, wherein
the pressurizing part performs perform pressurization forming in a diagonal direction from a vertex of the rectangular shape.

15. The separator shape processing device according to claim 10, wherein
the pressurizing part comprises
a sealing tool having a protrusion portion protruding toward the separators of the middle layer and an extension portion extending from the protrusion portion in the laminating direction of the electrode assembly, and a heater built into the sealing tool.

16. A method for manufacturing a pouch-type battery cell including an electrode assembly in which pluralities of positive electrodes, separators, and negative electrodes are sequentially and repeatedly laminated to be formed in a rectangular shape, and the separators are provided to protrude outward in a state where the positive electrodes and the negative electrodes are covered, comprising:
a separator forming step of the electrode assembly; and
a encapsulation step of sealing the electrode assembly after the separator forming step by inserting it into a pouch case, wherein
the separator forming step comprises
a processing step of thermally pressurizing middle layer separators excluding top layer separators and bottom layer separators in a direction perpendicular to the laminating direction of the electrode assembly through a pressurizing part to reduce protruding lengths of the separators.
